# EUROPÄISCHE PATENTANMELDUNG

(11) **EP 4 456 312 A2**
(43) Veröffentlichungstag der Anmeldung: **30.10.2024**
(21) Anmeldenummer: 24169999.0
(22) Anmeldetag: 12.04.2024
(51) Int. Cl.: H01M 50/533, H01M 50/172, H01M 50/466, H01M 10/0585, H01M 50/54

(54) **LITHIUM-IONEN-AKKUMULATOR**

(30) Priorität: 26.04.2023 DE 102023203849
(71) Anmelder: VOLKSWAGEN AG, 38440 Wolfsburg (DE)
(72) Erfinder: Jordan, Marco, 38229 Salzgitter (DE)

(57) **Zusammenfassung**

Die Erfindung betrifft einen Lithium-Ionen-Akkumulator (2) aufweisend zumindest eine Akkumulatorzelle (4), wobei die Akkumulatorzelle (4) zumindest ein Elektrodenblatt (14,16) aufweist, wobei das zumindest eine Elektrodenblatt (14,16) in einer Längsrichtung (22) ausgedehnt ist, wobei das zumindest eine Elektrodenblatt (14,16) einen Elektroden-Ableiter (26) aufweist und wobei der Elektroden-Ableiter (26) zwei Kontaktfahnen (28) ausbildet, nämlich eine erste Kontaktfahne (28p1,28s1) und eine zweite Kontaktfahne (28p2,28s2).

## Beschreibung

Die Erfindung betrifft einen Lithium-Ionen-Akkumulator, welcher zumindest eine Akkumulatorzelle aufweist.

Lithium-Ionen-Akkumulatoren sind als Speicher für elektrische Energie weit verbreitet. Sie werden unter anderem auch im Kraftfahrzeugbereich eingesetzt und dienen hier insbesondere als sogenannte Antriebs- oder Traktionsbatterien zum Antrieb von Hybrid- oder Elektrofahrzeugen.

Ein Lithium-Ionen-Akkumulator weist als wesentliche Komponenten eine positive Elektrode, eine negative Elektrode und ein Elektrolyt auf. Hinsichtlich des genauen Aufbaus ist hierbei eine Vielzahl von Ausführungen bekannt. Allen Ausführungen gemein ist aber, dass im Lithium-Ionen-Akkumulator freie und somit mobile Lithium-Ionen vorliegen, also Lithium-Ionen, die frei durch den Elektrolyten zwischen der negativen Elektrode und der positiven Elektrode hin- und herwandern können.

Ein mögliches Verfahren zur Herstellung von Lithium-Ionen-Akkumulatoren ist zum Beispiel in "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-Ionen-Batteriezelle, Frankfurt am Main, PEM der RWTH Aachen und VDMA Eigendruck" skizziert.

Der Erfindung liegt die Aufgabe zugrunde, einen vorteilhaft ausgebildeten Lithium-Ionen-Akkumulator anzugeben.

Diese Aufgabe wird durch einen Lithium-Ionen-Akkumulator mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Der erfindungsgemäße Lithium-Ionen-Akkumulator, nachfolgend auch kurz Akkumulator genannt, weist dabei zumindest eine Akkumulatorzelle auf. Typisch sind jedoch Ausführungen, bei denen der Akkumulator mehrere Akkumulatorzellen aufweist. Hierbei sind die Akkumulatorzellen dann üblicherweise gleichartig ausgestaltet.

Weiter weist die zumindest eine Akkumulatorzelle zumindest ein Elektrodenblatt auf. Jenes Elektrodenblatt bildet dabei eine Elektrode aus, also eine positive Elektrode oder eine negative Elektrode. Die positive Elektrode wirkt beim Laden des Akkumulators als Anode. Daher wird ein Elektrodenblatt, welches eine positive Elektrode ausbildet, nachfolgend als Anodenblatt bezeichnet. Die negative Elektrode wiederum wirkt beim Entladen des Akkumulators als Kathode. Daher wird ein Elektrodenblatt, welches eine positive Elektrode ausbildet, nachfolgend als Kathodenblatt bezeichnet.

Das zumindest eine Elektrodenblatt ist weiter in einer Längsrichtung ausgedehnt und insbesondere langgestreckt. Somit weist das zumindest eine Elektrodenblatt eine Länge L auf. Außerdem ist das zumindest eine Elektrodenblatt typischerweise in einer Querrichtung sowie in einer Stapelrichtung ausgedehnt. Somit weist dann das zumindest eine Elektrodenblatt außerdem eine Breite B sowie eine Dicke D auf. Hierbei ist die Stärke oder Dicke D typischerweise kleiner als die Breite B und auch kleiner als die Läge L. Typischerweise gilt dabei D kleiner 0,01 L. Üblicherweise gilt außerdem D kleiner 0,01 B.

Bevorzugt ist das zumindest eine Elektrodenblatt zudem durch eine beschichtete Folie ausgebildet. Durch beschichtete Folien ausgebildete Elektrodenblätter sind hierbei prinzipiell bekannt und deren Herstellung ist beispielsweise in "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-Ionen-Batteriezelle, Frankfurt am Main, PEM der RWTH Aachen und VDMA Eigendruck" skizziert.

Weiter weist das zumindest eine Elektrodenblatt einen Ableiter auf, nämlich einen Elektroden-Ableiter. Der Ableiter ist dabei typischerweise durch eine Folie ausgebildet, insbesondere eine Metallfolie. Hierbei bildet der Elektroden-Ableiter zwei Kontaktfahnen oder Tabs aus, nämlich eine erste Kontaktfahne und eine zweite Kontaktfahne. Der Elektroden-Ableiter bildet somit nicht nur eine Kontaktfahne aus, wie dies bei Elektrodenblättern nach dem Stand der Technik der Fall ist, sondern zwei Kontaktfahnen.

Dieser Ausgestaltung liegt die Überlegung zugrunde, dass bei Lithium-Ionen-Akkumulatoren der Innenwiderstand steigt, wenn die Abmessungen der Elektrodenblätter steigen, also zum Beispiel bei immer länger werdenden Elektrodenblättern. Mit Hilfe der zusätzlichen zweiten Kontaktfahne lässt sich der Innenwiderstand jedoch reduzieren. Auf diese Weise lassen sich hohe Energiedichten erreichen, ohne dass größere Abstriche im Hinblick auf die Schnellladefähigkeit in Kauf genommen werden müssen.

Zweckdienlich ist es weiter, wenn der Elektroden-Ableiter in der Längsrichtung ausgedehnt ist, wenn dieser in der Längsrichtung gesehen zwei einander gegenüberliegende Enden aufweist und wenn jedes der zwei Enden eine der zwei Kontaktfahnen ausbildet. Auf diese Weise ist eine relative große räumliche Trennung zwischen den zwei Kontaktfahnen realisiert.

Weiterhin ist das zumindest eine Elektrodenblatt je nach Anwendungsfall in der Längsrichtung über eine Länge größer gleich 300 mm, bevorzugt größer gleich 500 mm und insbesondere größer gleich 700 mm ausgedehnt. Insbesondere ist der Elektroden-Ableiter des zumindest einen Elektrodenblatt je nach Anwendungsfall in der Längsrichtung über eine Länge größer gleich 300 mm, bevorzugt größer gleich 500 mm und insbesondere größer gleich 700 mm ausgedehnt.

Wie zuvor bereits erwähnt ist der Elektroden-Ableiter typischerweise durch eine Folie ausgebildet, insbesondere eine Metallfolie. Die Folie weist dabei üblicherweise eine äußere Berandung auf, die durch eine geschlossene Kurve ausgebildet ist, welche insbesondere in einer Ebene liegt, die durch die Längsrichtung und die Querrichtung aufgespannt wird. Die von der geschlossenen Kurve begrenzte Fläche ist dabei bevorzugt zu zumindest 80 %, weiter bevorzugt zu zumindest 90 % und insbesondere zu zumindest 95% durch die Metallfolie abgedeckt. D. h., dass die Metallfolie vorzugsweise nicht perforiert ist, keine Schlitze aufweist und auch sonst keine Durchbrüche.

In vorteilhafter Weiterbildung ist das zumindest eine Elektrodenblatt durch eine beschichtete Folie ausgebildet, also insbesondere eine Folie der zuvor beschriebenen Art, auf die eine Beschichtung aufgebracht ist. Die entsprechende Beschichtung ist dabei je nach Anwendungsfall auf eine Seite der Folie oder auf zwei einander gegenüberliegenden Seiten der Folie aufgebracht, insbesondere flächig aufgebracht. Sie weist zweckdienlicherweise ein sogenanntes Aktivmaterial auf, nämlich ein Anoden-Aktivmaterial, wenn das zumindest eine Elektrodenblatt als Anodenblatt ausgebildet ist, oder ein Kathoden-Aktivmaterial, wenn das zumindest eine Elektrodenblatt als Kathodenblatt ausgebildet ist. Entsprechende Aktivmaterialien sind dabei prinzipiell bekannt.

Zweckdienlich ist weiter eine Ausgestaltung des Akkumulators, bei der die zumindest eine Ackumulatorzelle zumindest ein Basiselement aufweist. Dabei weist das Basiselement zwei Elektrodenblätter auf, also insbesondere zwei Elektrodenblätter der zuvor beschriebenen Art, wobei eines der Elektrodenblätter ein Anodenblatt ausbildet und das andere ein Kathodenblatt. Hierbei bildet weiterhin das Anodenblatt zwei Kontaktfahnen aus, nämlich zwei primäre Kontaktfahnen, und zudem bildet auch das Kathodenblatt zwei Kontaktfahnen ausbildet, nämlich zwei sekundäre Kontaktfahnen.

Je nach Ausführungsvariante weist das zumindest eine Basiselement zudem ein Separatorblatt oder ein Elektrolytblatt als ein weiteres Blatt auf. Auch für jedes weitere Blatt gilt typischerweise, dass dieses in der Längsrichtung ausgedehnt und insbesondere langgestreckt ist. Somit weist es eine Länge L auf. Außerdem ist es typischerweise in der Querrichtung sowie in der Stapelrichtung ausgedehnt. Somit weist es außerdem eine Breite B sowie eine Dicke D auf. Hierbei ist die Stärke oder Dicke D typischerweise kleiner als die Breite B und auch kleiner als die Läge L. Typischerweise gilt dabei D kleiner 0,01 L. Üblicherweise gilt außerdem D kleiner 0,01 B.

Davon unabhängig ist ein entsprechendes Separatorblatt zweckdienlicherweise aus einem Separatormaterial gefertigt und bildet einen Separator aus. Geeignete Separatormaterialien sind dabei an sich bekannt. Ein entsprechendes Elektrolytblatt wiederum weist bevorzugt einen Festkörperelektrolyten auf. Je nach Anwendungsfall kommt dabei zum Beispiel eines der Sulfide Li₂S-P₂S₅, Li₂S-SiS₂ oder Li₂S-GeS₂ als Festkörperelektrolyt zum Einsatz, eines der Oxide Li₇La₃Zr₂O₁₂ (LLZO) oder Li₃ₓLa_{2/3-3x}TiO₃ (LLTO) oder eines der Li-Argyrodite LisPSsx (mit X=Cl, Br oder I), Li₇PS₆ oder Li₇PSe₆.

Das weitere Blatt ist dann zweckdienlicherweise zwischen dem Anodenblatt und dem Kathodenblatt des zumindest einen Basiselements angeordnet.

Einer weiteren Ausführungsvariante entsprechend weist das zumindest eine Basiselement zwei Separatorblätter als weitere Blätter auf. Diese bilden dabei bevorzugt eine Tasche aus, in der eines der zwei Elektrodenblätter des Basiselements einliegt.

Von Vorteil ist außerdem eine Ausführung des Akkumulators, bei der die Akkumulatorzelle eine Einhausung aufweist sowie zumindest zwei in der Einhausung angeordnete Basiselemente, nämlich ein erstes Basiselement und ein zweites Basiselement. Dabei weist jedes der zwei Basiselemente zwei primäre Kontaktfahnen auf, nämlich eine erste primäre Kontaktfahne und eine zweite primäre Kontaktfahne. Zudem weist die Akkumulatorzelle zwei primäre Zell-Ableiter auf, die jeweils durch die Einhausung hindurchgeführt sind, nämlich einen ersten primären Zell-Ableiter und einen zweiten primären Zell-Ableiter. Hierbei sind dann die ersten primären Kontaktfahnen innerhalb der Einhausung an den ersten primären Zell-Ableiter angebunden sind und die zweiten primären Kontaktfahnen sind innerhalb der Einhausung an den zweiten primären Zell-Ableiter angebunden.

Alternativ oder zusätzlich zu den zwei primären Kontaktfahnen weisen die zwei in der Einhausung angeordneten Basiselemente jeweils zwei sekundäre Kontaktfahnen auf, nämlich eine erste sekundäre Kontaktfahne und eine zweite sekundäre Kontaktfahne. Hierbei sind dann die ersten sekundären Kontaktfahnen innerhalb der Einhausung an den ersten sekundären Zell-Ableiter angebunden und die zweiten sekundären Kontaktfahnen sind innerhalb der Einhausung an den zweiten sekundäre Zell-Ableiter angebunden.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Darin zeigen:
- Fig. 1: in einer Seitenansicht ein Akkumulator aufweisend mehrere Akkumulatorzellen,
- Fig. 2: in einer Seitenansicht ein Zellstapel aus einer der Akkumulatorzellen,
- Fig. 3: in einer Seitenansicht eine Basiseinheit des Zellstapels,
- Fig. 4: in einer Draufsicht die Basiseinheit des Zellstapels,
- Fig. 5: in einer Draufsicht ein Kathodenblatt der Basiseinheit,
- Fig. 6: in einer Draufsicht ein Anodenblatt der Basiseinheit, und
- Fig. 7: in einer Draufsicht ein Separatorblatt der Basiseinheit.

Einander entsprechende Teile sind in allen Figuren mit den gleichen Bezugszeichen versehen.

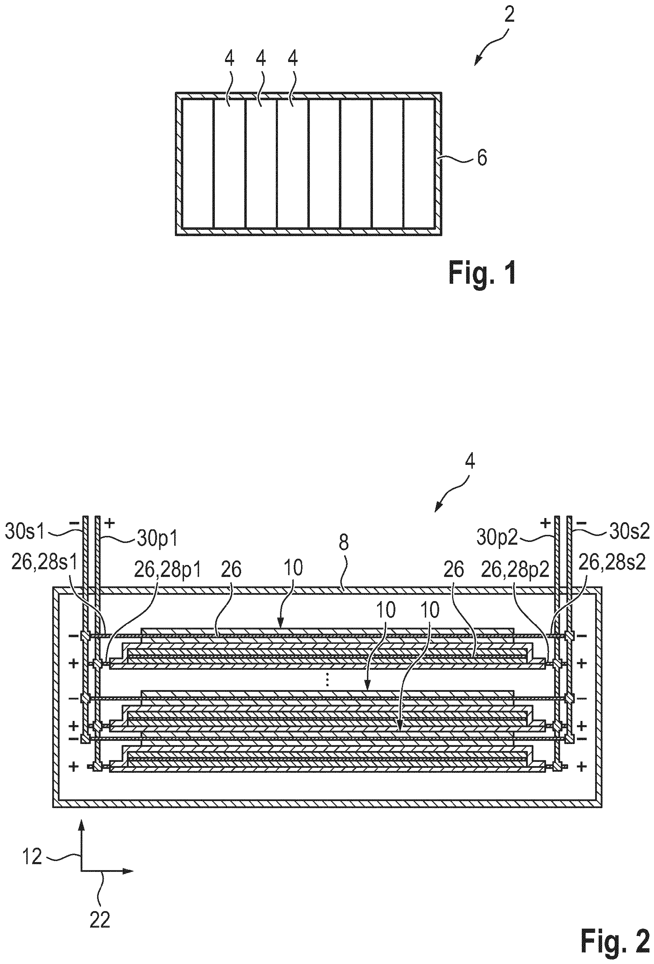

Ein nachfolgend exemplarisch beschriebener Lithium-Ionen-Akkumulator 2 ist in Fig. 1 schematisch dargestellt. Er weist mehrere gleichartig ausgestaltete Akkumulatorzellen 4 auf, die in einem Gehäuse 6 des Lithium-Ionen-Akkumulators 2 angeordnet sind.

Eine dieser Akkumulatorzellen 4 ist in Fig. 2 in einer Schnittdarstellung skizziert. Sie ist bevorzugt als sogenannte Pouch-Zelle ausgestaltet und weist eine Einhausung 8 auf. In der Einhausung 8 sind mehrere gleichartig ausgestaltete Basiselemente 10 in einer Stapelrichtung 12 übereinander gestapelt. Zudem ist die Einhausung 8 mit einem nicht näher dargestellten Elektrolyten befüllt, zum Beispiel LiPF₆.

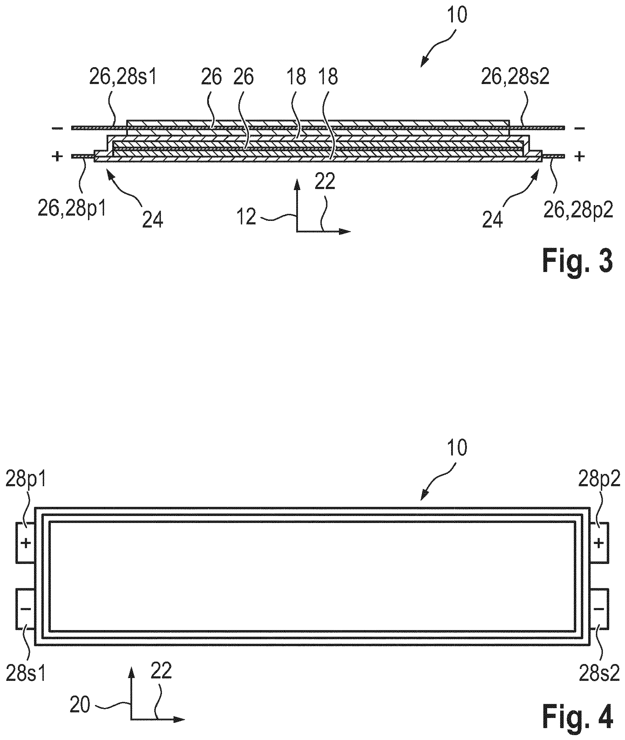

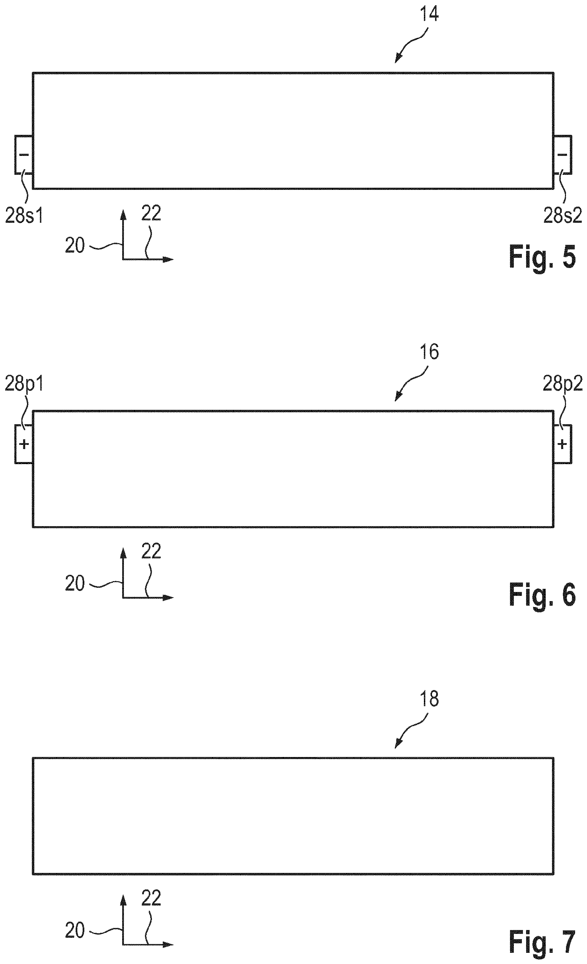

Eines der Basiselemente 10 ist in Fig. 3 in einer Schnittdarstellung und in Fig. 4 in einer Draufsicht gezeigt. Es weist vier Blätter auf, nämlich ein in Fig. 5 separat dargestelltes Kathodenblatt 14, ein in Fig. 6 separat dargestelltes Anodenblatt 16 und zwei Separatorblätter 18. Für jedes der Blätter gilt dabei, dass dessen Dicke wesentlich kleiner ist als dessen Breite und dessen Länge. D. h., dass dessen Ausdehnung in Stapelrichtung 12 kleiner ist als dessen Ausdehnung in Querrichtung 20 und auch kleiner als dessen Ausdehnung in Längsrichtung 22.

Die Separatorblätter 18 sind weiter aus einem Separatormaterial gefertigt, also beispielsweise einem Polyolefin. Eines der Separatorblätter 18 ist in Fig. 7 exemplarisch abgebildet.

Das Kathodenblatt 14 und das Anodenblatt 16 sind im Ausführungsbeispiel jeweils durch eine beschichtete Metallfolie ausgebildet. Dabei ist das Kathodenblatt 14 beispielsweise durch eine beschichtete Kupferfolie ausgebildet und das Anodenblatt 16 durch eine beschichtete Aluminiumfolie. Die Beschichtungen weisen jeweils ein Aktivmaterial auf. Also zum Beispiel Graphit als Kathoden-Aktivmaterial im Falle des Kathodenblatts 14 und beispielsweise LiCoO₂ als Anoden-Aktivmaterial im Falle des Anodenblatts 16. Im Ausführungsbeispiel sind die Beschichtungen zudem beidseitig auf die Metallfolien aufgebracht, also auf zwei in Stapelrichtung 12 gesehen gegenüberliegenden Seiten einer jeden Metallfolie.

Die zwei Separatorblätter 18 eines Basiselements 10 bilden im Ausführungsbeispiel außerdem eine Tasche aus. Hierzu sind die zwei Separatorblätter 18 entlang zweier Ränder 24 miteinander verbunden. Die zwei Ränder 24 erstrecken sich im Ausführungsbeispiel jeweils entlang der Querrichtung 20 und begrenzen die Tasche auf zwei in Längsrichtung 22 gegenüberliegenden Seiten. In der Tasche liegt weiterhin das Anodenblatt 16 des Basiselements 10 ein. Als Folge umschließen die zwei Separatorblätter 18 das Anodenblatt 16 nach Art einer Banderole. Dies ist aus Fig. 3 ersichtlich.

Wie zuvor bereits dargelegt sind die beiden Elektrodenblätter 14,16, also das Kathodenblatt 14 und das Anodenblatt 16, im Ausführungsbeispiel jeweils durch eine beschichtete Metallfolie ausgebildet. In beiden Fällen bildet die Metallfolie dabei einen Elektroden-Ableiter 26 aus. Im zuvor genannten Ausführungsbeispiel bildet also die Kupferfolie den Elektroden-Ableiter 26 des Kathodenblatts 14 und die Aluminiumfolie den Elektroden-Ableiter 26 des Anodenblatts 16 aus.

Weiter bildet jeder Elektroden-Ableiter 26 zwei Kontaktfahnen 28 aus und zwar an zwei in Längsrichtung 22 gesehen einander gegenüberliegenden Enden des entsprechenden Elektroden-Ableiters 26. Hierbei bildet die Metallfolie des Anodenblatt 16 eine erste primären Kontaktfahne 28p1 sowie eine zweite primäre Kontaktfahne 28p2 aus und die Metallfolie des Kathodenblatts 14 bildet eine erste sekundäre Kontaktfahne 28s1 sowie eine zweite sekundäre Kontaktfahne 28s2 aus.

Jede Akkumulatorzelle 4 weit außerdem vier separate Zell-Ableiter 30 auf, nämlich einen ersten primären Zell-Ableiter 30p1, einen zweiten primären Zell-Ableiter 30p2, einen ersten sekundären Zell-Ableiter 30s1 und einen zweiten sekundären Zell-Ableiter 30s2. Diese vier Zell-Ableiter 30 sind jeweils durch die Einhausung 8 hindurchgeführt. Sie durchsetzen somit also die Einhausung 8. Dies ist aus Fig. 2 ersichtlich.

Innerhalb der Einhausung 8 einer jeden Akkumulatorzelle 4 sind alle ersten primären Kontaktfahnen 28p1 der Akkumulatorzelle 4 an den ersten primären Zell-Ableiter 30p1 angebunden, alle zweiten primären Kontaktfahnen 28p2 der Akkumulatorzelle 4 sind an den zweiten primären Zell-Ableiter 30p2 angebunden, alle ersten sekundären Kontaktfahnen 28s1 der Akkumulatorzelle 4 sind an den ersten sekundären Zell-Ableiter 30s1 angebunden und alle zweiten sekundären Kontaktfahnen 28s1 der Akkumulatorzelle 4 sind an den zweiten sekundären Zell-Ableiter 30s2 angebunden. Die Anbindungen sind im Ausführungsbeispiel dabei jeweils durch Schweißverbindungen ausgebildet.

### Bezugszeichenliste

- 2: Lithium-Ionen-Akkumulator
- 4: Akkumulatorzelle
- 6: Gehäuse
- 8: Einhausung
- 10: Basiselement
- 12: Stapelrichtung
- 14: Kathodenblatt
- 16: Anodenblatt
- 18: Separatorblatt
- 20: Querrichtung
- 22: Längsrichtung
- 24: Rand
- 26: Elektroden-Ableiter
- 28: Kontaktfahne
- 28p1: erste primäre Kontaktfahne
- 28p2: zweite primäre Kontaktfahne
- 28s1: erste sekundäre Kontaktfahne
- 28s1: zweite sekundäre Kontaktfahne
- 30: Zell-Ableiter
- 30p1: erster primärer Zell-Ableiter
- 30p2: zweiter primärer Zell-Ableiter
- 30s1: erster sekundärer Zell-Ableiter
- 30s2: zweiter sekundärer Zell-Ableiter

## Patentansprüche

1. Lithium-Ionen-Akkumulator (2) aufweisend zumindest eine Akkumulatorzelle (4), wobei
- die Akkumulatorzelle (4) zumindest ein Elektrodenblatt (14,16) aufweist,
- das zumindest eine Elektrodenblatt (14,16) in einer Längsrichtung (22) ausgedehnt ist,
- das zumindest eine Elektrodenblatt (14,16) einen Elektroden-Ableiter (26) aufweist und
- der Elektroden-Ableiter (26) zwei Kontaktfahnen (28) ausbildet, nämlich eine erste Kontaktfahne (28p1,28s1) und eine zweite Kontaktfahne (28p2,28s2).

2. Lithium-Ionen-Akkumulator (2) nach Anspruch 1,
wobei der Elektroden-Ableiter (26) in der Längsrichtung (22) ausgedehnt ist, wobei der Elektroden-Ableiter (26) in der Längsrichtung gesehen zwei einander gegenüberliegende Enden aufweist und wobei jedes der zwei Enden eine der zwei Kontaktfahnen (28) ausbildet.

3. Lithium-Ionen-Akkumulator (2) nach Anspruch 1 oder 2,
wobei das zumindest eine Elektrodenblatt (14,16) in der Längsrichtung (22) über eine Länge größer gleich 500 mm ausgedehnt ist.

4. Lithium-Ionen-Akkumulator (2) nach einem der Ansprüche 1 bis 3,
wobei der Elektroden-Ableiter (26) durch eine Folie ausgebildet ist.

5. Lithium-Ionen-Akkumulator (2) nach einem der Ansprüche 1 bis 4,
wobei
- die Akkumulatorzelle (4) zumindest ein Basiselement (10) aufweist,
- das Basiselement (10) zwei Elektrodenblätter (14,16) aufweist, nämlich ein Anodenblatt (16) und ein Kathodenblatt (14),
- das Anodenblatt (16) zwei Kontaktfahnen (28p1,28p2) ausbildet, nämlich zwei primäre Kontaktfahnen (28p1,28p2), und
- das Kathodenblatt zwei Kontaktfahnen (28s1,28s2) ausbildet, nämlich zwei sekundäre Kontaktfahnen (28s1,28s2).

6. Lithium-Ionen-Akkumulator (2) nach Anspruch 5,
wobei zwischen dem Anodenblatt (16) und dem Kathodenblatt (14) des Basiselements (10) ein Separatorblatt (18) oder ein Elektrolytblatt des Basiselements (10) angeordnet ist.

7. Lithium-Ionen-Akkumulator (2) nach Anspruch 5,
wobei eines der zwei Elektrodenblätter (16) des Basiselements (10) zwischen zwei Separatorblättern (18) des Basiselements (10) einliegt.

8. Lithium-Ionen-Akkumulator (2) nach Anspruch 7,
wobei die zwei Separatorblätter (18) des Basiselements (10) eine Tasche ausbilden, in der das eine der zwei Elektrodenblätter (16) einliegt.

9. Lithium-Ionen-Akkumulator (2) nach einem der Ansprüche 5 bis 8,
wobei
- die Akkumulatorzelle (4) eine Einhausung (8) aufweist sowie zwei in der Einhausung (8) angeordnete Basiselemente (10), nämlich ein erstes Basiselement (10) und ein zweites Basiselement (10),
- jedes der zwei Basiselemente (10) zwei primäre Kontaktfahnen (28p1,28p2) aufweist, nämlich eine erste primäre Kontaktfahne (28p1) und eine zweite primäre Kontaktfahne (28p2),
- die Akkumulatorzelle (4) zwei primäre Zell-Ableiter (30p1,30p2) aufweist, die jeweils durch die Einhausung (8) hindurchgeführt sind, nämlich einen ersten primären Zell-Ableiter (30p1) und einen zweiten primären Zell-Ableiter (30p2),
- die ersten primären Kontaktfahnen (28p1) innerhalb der Einhausung (8) an den ersten primären Zell-Ableiter (30p1) angebunden sind und
- die zweiten primären Kontaktfahnen (28p2) innerhalb der Einhausung (8) an den zweiten primären Zell-Ableiter (30p2) angebunden sind.

10. Lithium-Ionen-Akkumulator (2) nach einem der Ansprüche 5 bis 9,
wobei
- die Akkumulatorzelle (2) eine Einhausung (8) aufweist sowie zwei in der Einhausung angeordnete Basiselemente (10), nämlich ein erstes Basiselement (10) und ein zweites Basiselement (10),
- jedes der zwei Basiselemente (10) zwei sekundäre Kontaktfahnen (28s1,28s2) aufweist, nämlich eine erste sekundäre Kontaktfahne (28s1) und eine zweite sekundäre Kontaktfahne (28s2),
- die Akkumulatorzelle (4) zwei sekundäre Zell-Ableiter (30s1,30s2) aufweist, die jeweils durch die Einhausung (8) hindurchgeführt sind, nämlich einen ersten sekundären Zell-Ableiter (30s1) und einen zweiten sekundären Zell-Ableiter (30s2),
- die ersten sekundären Kontaktfahnen (28s1) innerhalb der Einhausung (8) an den ersten sekundären Zell-Ableiter (30s1) angebunden sind und
- die zweiten sekundären Kontaktfahnen (28s2) innerhalb der Einhausung (8) an den zweiten sekundäre Zell-Ableiter (30s2) angebunden sind.
